# EUROPÄISCHE PATENTSCHRIFT

(11) **EP 3 581 811 B1**
(45) Veröffentlichungstag und Bekanntmachung des Hinweises auf die Patenterteilung: **03.08.2022**
(21) Anmeldenummer: 19179338.9
(22) Anmeldetag: 11.06.2019
(51) Int. Cl.: F16B 5/02, F16B 41/00

(54) **SYSTEM ZUR BEFESTIGUNG EINER ERSTEN KOMPONENTE AN EINER ZWEITEN KOMPONENTE**
SYSTEM FOR ATTACHING A FIRST COMPONENT TO A SECOND COMPONENT
SYSTÈME DE FIXATION D'UN PREMIER COMPOSANT SUR UN SECOND COMPOSANT

(30) Priorität: 11.06.2018 DE 102018113895
(43) Veröffentlichungstag der Anmeldung: 18.12.2019
(73) Patentinhaber: Illinois Tool Works, Inc., Glenview, Illinois 60025 (US)
(72) Erfinder: SANTOS, Nelson, Glenview, Illinois 60025 (US); DA ROCHA, Bruno, Glenview, Illinois 60025 (US); BECKER, Sven, Glenview, Illinois 60025 (US)
(74) Vertreter: HGF

(56) Entgegenhaltungen:
- EP-A1- 1 092 880
- EP-A1- 2 495 427
- DE-B3-102006 059 232
- DE-U1-202013 004 139
- US-A1- 2008 075 403

## Beschreibung

Die Erfindung betrifft ein System zur Befestigung einer ersten Komponente mit einer Durchgangsöffnung an einer zweiten Komponente, insbesondere einer zweiten Komponente eines Fahrzeugs, wie eines PKW oder LKW, umfassend die erste Komponente sowie einen Befestigungsbolzen.

Mit derartigen Systemen können unterschiedlichste Fahrzeugkomponenten miteinander verbunden werden. Dazu wird der Befestigungsbolzen durch die Durchgangsöffnung der ersten Komponente hindurch gesteckt und in einer Befestigungsaufnahme der zweiten Komponente, beispielsweise einem Innengewinde, befestigt, beispielsweise verschraubt. Dabei ist es aufgrund von Herstelltoleranzen, und insbesondere bei mehreren Befestigungspunkten nicht immer möglich, die Durchgangsöffnung der ersten Komponente exakt zu der entsprechenden Befestigungsaufnahme in der zweiten Komponente auszurichten. Es besteht daher ein Bedürfnis, einen Toleranzausgleich in radialer Richtung bereitzustellen.

In der DE 20 2013 004 139 U1 ist eine Karosseriestruktur mit wenigstens zwei Karosserieteilen, vorzugsweise unterschiedlicher Wärmeausdehnung, und wenigstens einem Verbindungselement offenbart. Mittels des Verbindungselements sollen in einem Ausgangszustand die Karosserieteile miteinander formschlüssig und gegeneinander in wenigstens eine Richtung bewegbar verbunden sein. Hierbei ist ein Hülsenelement vorgesehen, welches wenigstens einen, nach außen ragenden und gegen eine Berandung einer Durchgangsöffnung eines Karosserieteils anliegenden Materialabschnitt aufweist. Zudem soll ein Außenumfang des Hülsenelements kleiner als der Innendurchmesser der Durchgangsöffnung ausgebildet sein, so dass im endmontierten Zustand eine Ausdehnungsbewegung des Karosserieteils in wenigstens eine Richtung möglich ist.

Aus der D2 DE 10 2006 059 232 B3 geht eine Montageinheit und eine solche umfassendes Bauteil hervor.

In der EP 2 495 427 A1 ist eine Kupplungsvorrichtung zum mechanischen Verbinden einer Kraftstoffzuleitung mit einem Zylinderkopf eines Verbrennungsmotors offenbart. Die Kupplungsvorrichtung umfasst dabei zwei stirnseitig aneinander anliegende Hülsenelemente zum Anordnen in einer Durchgangsöffnung eines Bauteils.

In der US 2008/075403 A1 ist eine Anordnung zur Isolierung eines Werkstücks beschrieben.

Diese umfasst ein isolierendes Verbindungselement zum Verbinden eines Werkstücks mit einem zweiten Werkstück.

Ausgehend von dem erläuterten Stand der Technik liegt der Erfindung daher die Aufgabe zugrunde, ein System der eingangs genannten Art bereitzustellen, das bei einfacher Montage einen radialen Toleranzausgleich möglichst in jeder radialen Richtung bereitstellt.

Die Erfindung löst die Aufgabe durch den Gegenstand von Anspruch 1. Vorteilhafte Ausgestaltungen finden sich in den abhängigen Ansprüchen, der Beschreibung und den Figuren.

Für ein System der eingangs genannten Art löst die Erfindung die Aufgabe dadurch, dass eine erste Begrenzungshülse mit einem ersten Anlageflansch und eine zweite Begrenzungshülse mit einem zweiten Anlageflansch vorgesehen ist, wobei die erste Begrenzungshülse und die zweite Begrenzungshülse von gegenüberliegenden Seiten in die Durchgangsöffnung der ersten Komponente einsetzbar und durch Einsetzen der ersten Begrenzungshülse in die zweite Begrenzungshülse miteinander verbindbar sind, so dass der erste Anlageflansch und der zweite Anlageflansch von gegenüberliegenden Seiten an der ersten Komponente anliegen, wobei der Befestigungsbolzen durch die Begrenzungshülsen hindurch in eine Befestigungsaufnahme der zweiten Komponente einsetzbar ist, und dass der Außendurchmesser der zweiten Begrenzungshülse geringer ist als der Innendurchmesser der Durchgangsöffnung der ersten Komponente, wobei Haltemittel zum Halten des Befestigungsbolzens in der ersten Begrenzungshülse in einer Vormontageposition ohne zusätzliche Haltehülse vorgesehen sind, wobei die Haltemittel Rastmittel an der Innenumfangsfläche der ersten Begrenzungshülse und Rastmittel an der Außenumfangsfläche des Befestigungsbolzens umfassen.

Bei den mit dem erfindungsgemäßen System miteinander verbindbaren Komponenten kann es sich insbesondere um Komponenten eines Fahrzeugs, wie eines PKW oder LKW, handeln. Lediglich beispielhaft seien Komponenten einer Ölwanne genannt.

Erfindungsgemäß sind eine erste Begrenzungshülse mit einem ersten Anlageflansch und eine zweite Begrenzungshülse mit einem zweiten Anlageflansch vorgesehen. Die erste Begrenzungshülse kann eine kreiszylindrische Außenumfangsfläche und eine kreiszylindrische Innenumfangsfläche besitzen. Die zweite Begrenzungshülse kann ebenfalls eine kreiszylindrische Außenumfangsfläche und eine kreiszylindrische Innenumfangsfläche besitzen. Die Durchgangsöffnung der ersten Komponente kann kreiszylindrisch sein. Der erste Anlageflansch kann zum Beispiel kreisringförmig ausgestaltet sein. Auch der zweite Anlageflansch kann zum Beispiel kreisringförmig ausgestaltet sein. Der Befestigungsbolzen kann einen im Querschnitt gegenüber einem Schaftabschnitt vergrößerten Bolzenkopf aufweisen, der im montierten Zustand an der Oberseite des ersten Anlageflansches der ersten Begrenzungshülse anliegt. Mit dem Schaftabschnitt wird der Befestigungsbolzen in eine Befestigungsaufnahme der zweiten Komponente eingesetzt und in dieser befestigt. Dadurch wird die erste Komponente zwischen den Bolzenkopf bzw. dem ersten Anlageflansch der ersten Begrenzungshülse und der zweiten Komponente bzw. dem zweiten Anlageflansch der zweiten Begrenzungshülse sicher gehalten. Das erfindungsgemäße System kann auch die zweite Komponente umfassen. Der Befestigungsbolzen kann zum Beispiel aus Metall bestehen. Bei dem Befestigungsbolzen kann es sich um einen Schraubenbolzen handeln, der dann in ein entsprechendes Gewinde der zweiten Komponente eingeschraubt wird.

Die erste Begrenzungshülse und die zweite Begrenzungshülse werden von gegenüberliegenden Seiten in die Durchgangsöffnung der ersten Komponente eingesetzt und in der Durchgangsöffnung miteinander verbunden. Der erste Anlageflansch der ersten Begrenzungshülse gelangt dann von einer Seite in Anlage mit der ersten Komponente und der zweite Anlageflansch der zweiten Begrenzungshülse gelangt von einer gegenüberliegenden Seite in Anlage mit der ersten Komponente. Das Anliegen der Anlageflansche an gegenüberliegenden Seiten der ersten Komponente kann dabei insbesondere derart sein, dass eine (leichte) Klemmung vorliegen kann, so dass die Begrenzungshülsen nicht von selbst verrutschen, aber manuell oder durch eine Montagekraft seitlich verschiebbar sind. Eine solche Klemmung ist allerdings nicht erforderlich. Diese seitliche Verschiebbarkeit wird erfindungsgemäß dadurch ermöglicht, dass der Außendurchmesser der zweiten Begrenzungshülse geringer ist als der Innendurchmesser der Durchgangsöffnung der ersten Komponente. Die zweite Begrenzungshülse bildet mit ihrer Außenumfangsfläche die Außenseite der miteinander verbundenen Begrenzungshülsen.

Indem zwischen dieser Außenumfangsfläche der zweiten Begrenzungshülse und der Innenumfangsfläche der Durchgangsöffnung ein Abstand besteht, können die Begrenzungshülsen und mit ihnen der durch die Begrenzungshülsen hindurchgeführte Befestigungsbolzen in radialer Richtung in Bezug auf die Längsachse des Befestigungsbolzens bzw. die Montagerichtung des Befestigungsbolzens verschoben werden. Dadurch kann bei nicht exakt zueinander ausgerichteter Durchgangsöffnung und Befestigungsaufnahme ein Toleranzausgleich in radialer Richtung erfolgen. Insbesondere können etwaige Fehlausrichtungen zwischen der Durchgangsöffnung der ersten Komponente und der Befestigungsaufnahme der zweiten Komponente auf diese Weise kompensiert werden. Der aufgrund des geringeren Außendurchmessers der zweiten Begrenzungshülse im Vergleich zu dem Innendurchmesser der Durchgangsöffnung der ersten Komponente gebildete Abstand kann dabei insbesondere über den gesamten Umfang der zweiten Begrenzungshülse bestehen. Es ist also ein Toleranzausgleich in jeder radialen Richtung möglich. Beispielsweise kann der Außendurchmesser der zweiten Begrenzungshülse gegenüber dem Innendurchmesser der Durchgangsöffnung der ersten Komponente um mindestens 10 %, vorzugsweise mindestens 20% verringert sein. Ein radialer Abstand zwischen der Außenumfangsfläche der zweiten Begrenzungshülse und der Innenumfangsfläche der Durchgangsöffnung der ersten Komponente kann beispielsweise mindestens 2 mm, vorzugsweise mindestens 4 mm, betragen.

Das erfindungsgemäße System erlaubt einerseits eine einfache Montage der ersten Komponente an der zweiten Komponente. Andererseits erlaubt es in konstruktiv einfacher Weise einen umfassenden radialen Toleranzausgleich.

Gemäß einer Ausgestaltung können Rastmittel vorgesehen sein zum Verrasten der ersten Begrenzungshülse an der zweiten Begrenzungshülse, wenn die erste Begrenzungshülse in die zweite Begrenzungshülse eingesetzt ist. Hieraus ergibt sich eine besonders einfache Montage, wobei gleichzeitig in einfacher Weise eine Demontierbarkeit realisiert werden kann. Gemäß einer weiteren Ausgestaltung können die Rastmittel mindestens einen Rastvorsprung und/oder mindestens eine Rastaufnahme an der Außenumfangsfläche der ersten Begrenzungshülse und mindestens einen Rastvorsprung und/oder mindestens eine Rastaufnahme an der Innenumfangsfläche der zweiten Begrenzungshülse umfassen. Grundsätzlich sind beliebige Kombinationen von Rastelementen denkbar. Zum Beispiel könnten an einer der Begrenzungshülsen mehrere Rastvorsprünge und an der anderen Begrenzungshülse ein ringförmiger Rastvorsprung vorgesehen sein. Durch einen solchen ringförmigen Rastvorsprung ist eine Verrastung der Begrenzungshülsen miteinander in beliebigen Drehpositionen möglich.

Erfindungsgemäß sind Haltemittel vorgesehen zum Halten des Befestigungsbolzens in der ersten Begrenzungshülse in einer Vormontageposition.

Hierdurch werden die Montage und die Anlieferung zum Montageort weiter erleichtert, indem der Befestigungsbolzen vorläufig in der ersten Begrenzungshülse gehalten wird. Er kann somit während des Transports verliersicher mit der ersten Begrenzungshülse verbunden sein und am Montageort in einfacher Weise gemeinsam mit der ersten Begrenzungshülse an der zweiten Begrenzungshülse montiert werden.

Erfindungsgemäß umfassen die Haltemittel Rastmittel an der Innenumfangsfläche der ersten Begrenzungshülse. Die Rastmittel können mindestens einen Rastvorsprung und/oder mindestens eine Rastaufnahme an der Innenumfangsfläche der ersten Begrenzungshülse umfassen. Durch die Rastmittel erfolgt ein besonders einfaches Halten. Die Rastmittel der ersten Begrenzungshülse können zum Beispiel an einem Gewinde des Befestigungsbolzens verrasten.

Erfindungsgemäß umfassen die Haltemittel Rastmittel an der Außenumfangsfläche des Befestigungsbolzens. Wiederum können die Rastmittel dann mindestens einen Rastvorsprung und/oder mindestens eine Rastaufnahme an der Außenumfangsfläche des Befestigungsbolzens umfassen. Beispielhaft könnte an dem Befestigungsbolzen ein ringförmiger Rastvorsprung oberhalb des Gewindes auf der dem Bolzenkopf zugewandten Seite ausgebildet sein.

Gemäß einer weiteren nicht-erfindungsgemäßen Ausgestaltung können die Haltemittel eine auf den Befestigungsbolzen aufschiebbare und in die erste Begrenzungshülse einsetzbare Haltehülse umfassen. Es ist dann also ein zusätzliches Halteelement vorgesehen. Die Haltehülse kann zum Beispiel im Wesentlichen kreiszylindrisch ausgebildet sein. Das Vorsehen einer zusätzlichen Haltehülse kann vorteilhaft sein, da zum Beispiel an dem Befestigungsbolzen und gegebenenfalls auch an der ersten Begrenzungshülse keine weiteren Vorkehrungen für Haltemittel getroffen werden müssen. Durch das Vorsehen einer zusätzlichen Haltehülse kann außerdem die axiale Relativposition zwischen der ersten Begrenzungshülse und dem Befestigungsbolzen definiert vorgegeben werden.

Die Haltehülse kann beispielsweise durch Reibkraft an dem Befestigungsbolzen und der ersten Begrenzungshülse gehalten sein. Es ergibt sich hierdurch eine besonders einfache Befestigung ohne dass mechanische Haltemittel erforderlich sind. Diese Ausgestaltung eignet sich besonders, wenn die Haltehülse aus Kunststoff oder Gummi oder einem anderen elastischen Material besteht.

Die Haltehülse kann auch Rastmittel aufweisen, mit denen sie an dem Befestigungsbolzen und/oder an der ersten Begrenzungshülse gehalten ist. Es ergibt sich hierdurch ein besonders sicherer Halt. Diese Ausgestaltung ist beispielsweise auch gut geeignet, wenn die Haltehülse aus einem Metall besteht.

Wie bereits erläutert, kann die Haltehülse je nach Anforderung aus Kunststoff oder Metall bestehen. Wie ebenfalls bereits erwähnt, kann bei einer Haltehülse aus Kunststoff in einfacher Weise ein Halten durch Reibschluss realisiert werden. Andererseits bietet eine Haltehülse aus Metall den Vorteil einer besonders hohen Temperaturbeständigkeit, so dass sie auch in Umgebungen mit hohen Temperaturen oder hohen Temperaturschwankungen problemlos einsetzbar ist. Auch eine Metallhülse kann im Übrigen durch Reibkraft an dem Befestigungsbolzen gehalten sein. Sie kann beispielsweise durch Rastmittel an der ersten Begrenzungshülse gehalten sein.

Die erste Begrenzungshülse kann nach einer weiteren Ausgestaltung aus Kunststoff oder Metall bestehen und/oder die zweite Begrenzungshülse kann aus Kunststoff oder Metall bestehen. Wiederum kann die Materialwahl je nach Anforderung erfolgen. Metall als Werkstoff kann besonders hohe Kräfte aufnehmen und bietet gleichzeitig eine besonders hohe Temperaturbeständigkeit. Da bei dem erfindungsgemäßen System die erste Begrenzungshülse im Wesentlichen die Montagekraft aufnimmt, kann es günstig sein, die erste Begrenzungshülse aus Metall vorzusehen. Da an die zweite Begrenzungshülse häufig keine derart hohen Anforderungen hinsichtlich der Kraftaufnahme bestehen, kommen hier auch andere Materialien in Frage, zum Beispiel Kunststoff oder ein anderes elastisches Material. Dies bietet sich besonders an, wenn zusätzlich ein axialer Toleranzausgleich gewünscht ist, wie nachfolgend noch erläutert wird.

Es können weiterhin axiale Ausgleichsmittel vorgesehen sein, die bei miteinander verbundener erster und zweiter Begrenzungshülse einen Toleranzausgleich für den axialen Abstand zwischen dem ersten Anlageflansch und dem zweiten Anlageflansch bereitstellen. Dieser Abstand bezieht sich auf den Abstand zwischen den einander zugewandten Innenseiten von erstem und zweitem Anlageflansch, also die Seiten von erstem und zweitem Anlagenflansch, die an den gegenüberliegenden Seiten der ersten Komponente anliegen. Indem für diesen Abstand ein Toleranzausgleich bereitgestellt wird, kann das erfindungsgemäße System innerhalb gewisser Grenzen für unterschiedlich dicke erste Komponenten eingesetzt werden. Auf diese Weise können beispielsweise Herstelltoleranzen ausgeglichen werden. Die Axialrichtung entspricht dabei wiederum der Längsachse des Befestigungsbolzens bzw. seiner Montagerichtung in den Begrenzungshülsen.

Die axialen Ausgleichsmittel können zum Beispiel elastische Vorsprünge an der der ersten Komponente zugewandten Innenseite des ersten Anlageflansches der ersten Begrenzungshülse und/oder an der der ersten Komponente zugewandten Innenseite des zweiten Anlageflansches der zweites Begrenzungshülse umfassen. Alternativ oder zusätzlich können die axialen Ausgleichsmittel weiterhin elastische Vorsprünge an der dem ersten Anlageflansch der ersten Begrenzungshülse und/oder dem zweiten Anlageflansch der zweiten Begrenzungshülse zugewandten Seite der ersten Komponente umfassen. Diese elastischen Vorsprünge, die beispielsweise als Noppen oder dergleichen ausgebildet sein können, werden je nach Dicke der ersten Komponente etwas deformiert, so dass entsprechend der Deformation ein Toleranzausgleich hinsichtlich des Abstands zwischen dem ersten und zweiten Anlageflansch bereitgestellt werden kann.

Ausführungsbeispiele der Erfindung werden nachfolgend anhand von Figuren näher erläutert. Es zeigen schematisch:
Figur 1 ein nichterfindungsgemäßes System in einer teilweise geschnittenen Ansicht,
Figur 2 einen Befestigungsbolzen des in Figur 1 gezeigten Systems in einer perspektivischen Ansicht,
Figur 3 eine zweite Begrenzungshülse des in Figur 1 gezeigten 2. nichterfindungsgemäßen Systems in einer perspektivischen Ansicht,
Figur 4 eine erste Begrenzungshülse des in Figur 1 gezeigten nichterfindungsgemäßen Systems in einer ersten perspektivischen Ansicht,
Figur 5 die erste Begrenzungshülse aus Figur 4 in einer zweiten perspektivischen Ansicht,
Figur 6 eine erste Begrenzungshülse für das in Figur 1 gezeigte nichterfindungsgemäße System nach einem weiteren Ausführungsbeispiel in einer ersten perspektivischen Ansicht,
Figur 7 die erste Begrenzungshülse aus Figur 6 in einer zweiten perspektivischen Ansicht,
Figur 8 eine Haltehülse für das in Figur 1 gezeigte nicht-erfindungsgemäße System nach einem weiteren Ausführungsbeispiel in einer perspektivischen Ansicht,
Figur 9 eine zweite Begrenzungshülse für das in Figur 1 gezeigte nichterfindungsgemäße System nach einem weiteren Ausführungsbeispiel in einer ersten perspektivischen Ansicht,
Figur 10 die in Figur 9 gezeigte zweite Begrenzungshülse in einer zweiten perspektivischen Ansicht,
Figur 11 ein nichterfindungsgemäßes System nach einem weiteren Ausführungsbeispiel in einer teilweise geschnittenen Ansicht,
Figur 12 ein erfindungsgemäßes System nach einem Ausführungsbeispiel in einer teilweise geschnittenen Ansicht,
Figur 13 einen Befestigungsbolzen des in Figur 12 gezeigten Systems in einer ersten perspektivischen Ansicht,
Figur 14 den Befestigungsbolzen aus Figur 13 in einer zweiten perspektivischen Ansicht,
Figur 15 eine erste Begrenzungshülse des in Figur 12 gezeigten Systems in einer ersten perspektivischen Ansicht,
Figur 16 die erste Begrenzungshülse aus Figur 15 in einer zweiten perspektivischen Ansicht,
Figur 17 das in Figur 1 gezeigte nicht-erfindungsgemäße System im an einer ersten Komponente befestigten Zustand in einer Schnittansicht,
Figur 18 das in Figur 17 gezeigte nicht-erfindungsgemäße System in einem weiteren an einer ersten Komponente befestigten Zustand mit der in den Figuren 6 und 7 gezeigten ersten Begrenzungshülse und der in den Figuren 9 und 10 gezeigten zweiten Begrenzungshülse in einer Schnittansicht.

Soweit nichts anderes angegeben ist, bezeichnen in den Figuren gleiche Bezugszeichen gleiche Gegenstände.

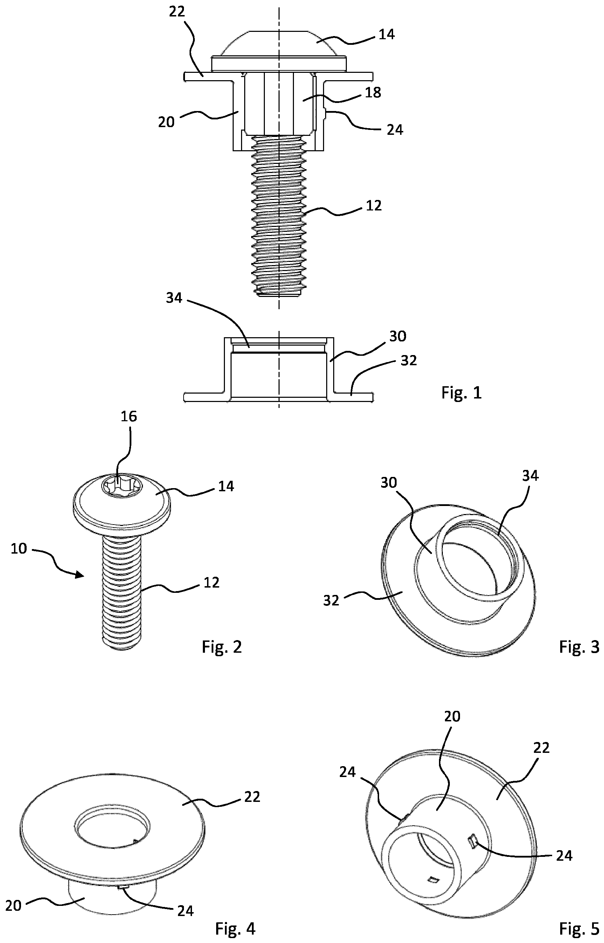

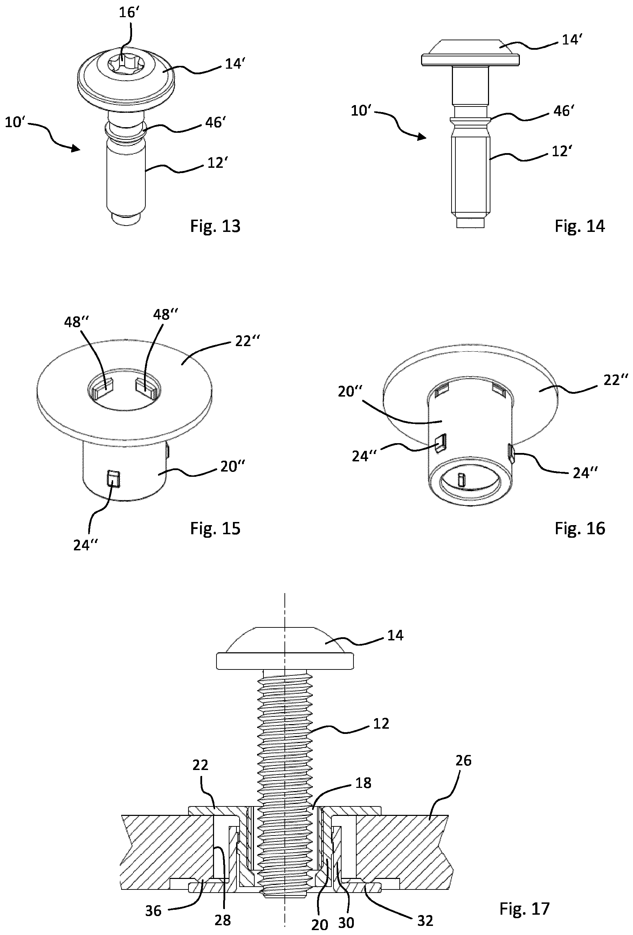

Das in Figur 1 gezeigte nichterfindungsgemäße System umfasst einen in Figur 2 näher dargestellten Befestigungsbolzen 10; vorliegend einen Schraubenbolzen, mit einem Schaftabschnitt mit einem Außengewinde 12 und einem im Querschnitt gegenüber dem Schaftabschnitt vergrößerten Bolzenkopf 14 mit einem Eingriffsabschnitt 16 für ein Werkzeug zum Drehen des Befestigungsbolzens 10. Bei dem in Figur 1 gezeigten Ausführungsbeispiel ist der Befestigungsbolzen 10, der beispielsweise aus Metall bestehen kann, mit seinem Schaftabschnitt 12 in einer hohlzylindrischen Haltehülse 18 mittels Reibschluss gehalten. Die Haltehülse 18, die beispielsweise aus Kunststoff bestehen kann, ist andererseits mittels Reibschluss in einer ebenfalls hohlzylindrischen ersten Begrenzungshülse 20 gehalten. Die erste Begrenzungshülse 20, die beispielsweise aus Metall bestehen kann, weist einen ersten Anlageflansch 22 auf, der in dem gezeigten Beispiel kreisringförmig ausgebildet ist. An der Außenumfangsfläche der ersten Begrenzungshülse 20 sind in dem gezeigten Beispiel mehrere über den Umfang verteilte Rastvorsprünge 24 ausgebildet. Zur Montage wird der Befestigungsbolzen 10 gemeinsam mit der ersten Begrenzungshülse 20 in eine beispielsweise kreiszylindrische Durchgangsöffnung 28 einer ersten Komponente 26 eines Fahrzeugs, wie eines PKW oder LKW, eingesetzt, wie dies beispielsweise in Figur 17 gezeigt ist. Für diese Montage kann der Befestigungsbolzen 10 mit seinem Außengewinde 12 beispielsweise nur teilweise in die Haltehülse 18 eingesetzt sein, wie dies in Figur 17 dargestellt ist.

Zur weiteren Montage wird anschließend von der gegenüberliegenden Seite der ersten Komponente 26, in Figur 17 also von unten, eine zweite Begrenzungshülse 30 eingesetzt. Die zweite Begrenzungshülse 30, die beispielsweise ebenfalls aus Metall bestehen kann, ist ebenfalls hohlzylindrisch und weist ebenfalls einen kreisringförmigen zweiten Anlageflansch 32 auf. Im Bereich ihres dem zweiten Anlageflansch 32 abgewandten Endes ist an der Innenumfangsfläche der zweiten Begrenzungshülse 30 ein ringförmiger Rastvorsprung 34 ausgebildet. Dieser verrastet im in die Durchgangsöffnung 28 der ersten Komponente 26 eingesetzten Zustand an den Rastvorsprüngen 24 der ersten Begrenzungshülse 20, wie in Figur 17 zu erkennen. Dadurch sind erste und zweite Begrenzungshülse 20, 30 lösbar miteinander verbunden. In diesem miteinander verbundenen Zustand liegt der erste Anlageflansch 22 mit seiner der zweiten Begrenzungshülse 30 zugewandten Innenseite von einer ersten Seite an der ersten Komponente 26 an, in Figur 17 von der Oberseite. Der zweite Anlageflansch 32 der zweiten Begrenzungshülse 30 liegt mit seiner der ersten Begrenzungshülse 20 zugewandten Innenseite an der gegenüberliegenden Seite der ersten Komponente 26, in Figur 17 der Unterseite, an dieser an. Dabei kann eine leichte Klemmung bestehen, so dass das System an der ersten Komponente 26 gehalten ist.

Wie insbesondere in Figur 17 gut zu erkennen, besteht zwischen der Außenumfangsfläche der zweiten Begrenzungshülse 30 und der Innenumfangsfläche der Durchgangsöffnung 28 ein radialer Abstand.

Dieser wird gebildet, indem der Außendurchmesser der zweiten Begrenzungshülse 30 kleiner ist als der Innendurchmesser der Durchgangsöffnung 28. Das System ist in dem in Figur 17 gezeigten Zustand gegebenenfalls unter Überwindung der Klemmung in radialer Richtung verschiebbar, und zwar in jeder radialen Richtung, um einen umfassenden radialen Toleranzausgleich zu gewährleisten. Auf diese Weise kann der Befestigungsbolzen 10 mit seinem Schaftabschnitt 12 in Bezug auf eine Befestigungsaufnahme einer in den Figuren nicht näher dargestellten zweiten Komponente des Fahrzeugs ausgerichtet und in die Befestigungsaufnahme eingesetzt, in dem dargestellten Beispiel in ein Innengewinde der Befestigungsaufnahme eingeschraubt werden. Auf diese Weise kann die erste Komponente 26 an der zweiten Komponente befestigt werden.

In Figur 17 ist noch zu erkennen, dass an der dem zweiten Anlageflansch 32 der zweiten Begrenzungshülse 30 zugewandten Seite, in Figur 17 der Unterseite, der ersten Komponente 26, an der der zweite Anlageflansch 32 anliegt, mehrere elastische Vorsprünge 36, insbesondere Noppen 36, ausgebildet sind. Je nach Deformationsgrad der Noppen 36 kann so auch ein axialer Toleranzausgleich in Bezug auf den Abstand zwischen den einander zugewandten Innenseiten von erstem und zweitem Anlageflansch 22, 32 bereitgestellt werden.

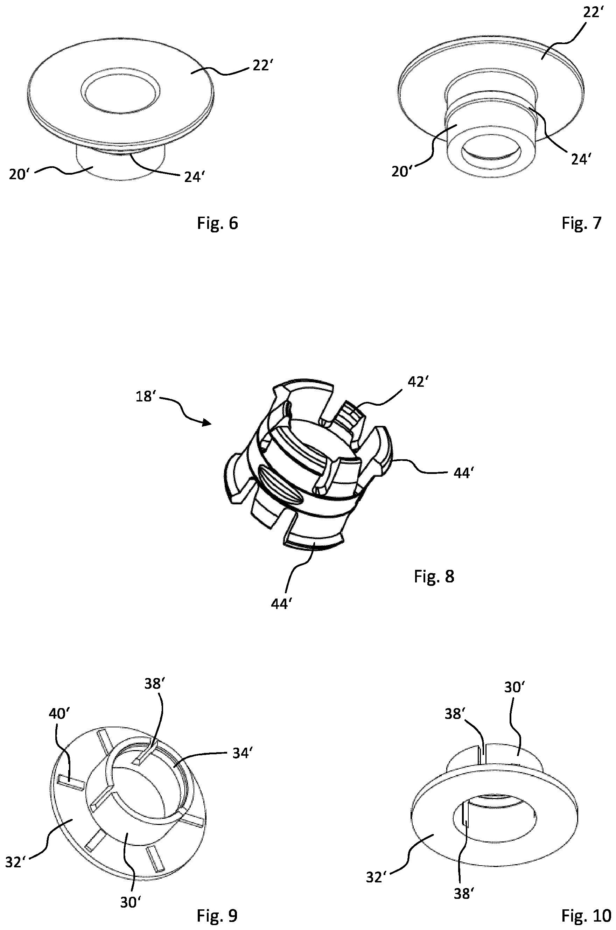

In den Figuren 6 und 7 ist eine erste Begrenzungshülse 20' nach einem weiteren Ausführungsbeispiel dargestellt. Diese erste Begrenzungshülse 20' kann beispielsweise bei dem in Figur 1 gezeigten System anstelle der ersten Begrenzungshülse 20 zum Einsatz kommen. Sie entspricht hinsichtlich ihrer Ausgestaltung weitgehend der ersten Begrenzungshülse 20. Entsprechend umfasst auch sie einen kreisringförmigen ersten Anlageflansch 22'. Sie unterscheidet sich von der in den Figuren 4 und 5 gezeigten ersten Begrenzungshülse 20 hinsichtlich der Rastmittel zum Verrasten an der zweiten Begrenzungshülse. So besitzt die erste Begrenzungshülse 20' nach dem in den Figuren 6 und 7 gezeigten Ausführungsbeispiel einen ringförmigen Rastvorsprung 24' an ihrer Außenumfangsfläche. Die in den Figuren 6 und 7 gezeigte erste Begrenzungshülse 20' kann beispielsweise mit der in den Figuren 9 und 10 gezeigten zweiten Begrenzungshülse 30' nach einem weiteren Ausführungsbeispiel bei dem in Figur 1 gezeigten System zum Einsatz kommen. Die in den Figuren 9 und 10 gezeigte zweite Begrenzungshülse 30' weist wiederum ebenfalls einen kreisringförmigen zweiten Anlageflansch 32' auf. Im Unterschied zu der in Figur 3 gezeigten zweiten Begrenzungshülse 30 ist die zweite Begrenzungshülse 30' nach den Figuren 9 und 10 allerdings mit mehreren axialen Schlitzen 38' versehen. Außerdem weist sie an ihrer Innenumfangsfläche einen ringförmig umlaufenden, lediglich durch die Schlitze 38' unterbrochenen Rastvorsprung 34' auf. Weiterhin ist auf der in Figur 9 zu erkennenden, im montierten Zustand an der ersten Komponente 26 anliegenden Innenseite des zweiten Anlageflansches 32 eine Mehrzahl von über den Umfang verteilt angeordneten elastischen Vorsprüngen 40' angeordnet. Die in den Figuren 9 und 10 gezeigte zweite Begrenzungshülse 30' kann beispielsweise aus Kunststoff bestehen. Die erste Begrenzungshülse 20' aus den Figuren 6 und 7 kann beispielsweise aus Metall bestehen. Sie könnte jedoch ebenso wie die erste Begrenzungshülse 30 aus den Figuren 4 und 5 auch aus Kunststoff bestehen. Gleiches gilt für die zweite Begrenzungshülse 30.

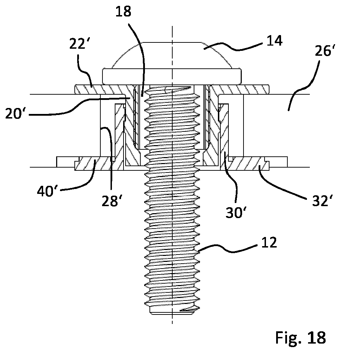

Die Montage mit dem in Figur 1 gezeigten System erfolgt mit der in den Figuren 6 und 7 gezeigten ersten Begrenzungshülse 20' und der in den Figuren 9 und 10 gezeigten zweiten Begrenzungshülse 30' grundsätzlich in gleicher Weise wie oben zu der ersten Begrenzungshülse 20 und der zweiten Begrenzungshülse 30 erläutert. In diesem Fall verrasten allerdings der ringförmige Rastvorsprung 24' der ersten Begrenzungshülse 20' und der ringförmige Rastvorsprung 34' der zweiten Begrenzungshülse 30' miteinander, wobei die axialen Schlitze 38' eine ausreichende Elastizität der zweiten Begrenzungshülse 30' für diese Verrastung zur Verfügung stellen. Das in Figur 1 gezeigte nichterfindungsgemäße System unter Verwendung der ersten Begrenzungshülse 20' und der zweiten Begrenzungshülse 30' ist in Figur 18 im an einer ersten Komponente 26' mit einer Durchgangsöffnung 28' montierten Zustand gezeigt. Wie in Figur 18 zu erkennen, liegen in diesem Fall die elastischen Vorsprünge 40' des zweiten Anlageflansches 32' an der ersten Komponente 26', in Figur 18 der Unterseite der ersten Komponente 26', an. Diese stellen wie die zu Figur 17 erläuterten elastischen Noppen 36 einen Toleranzausgleich auch in axialer Richtung bereit.

In Figur 8 ist ein weiteres Ausführungsbeispiel einer Haltehülse 18' dargestellt, die beispielsweise ebenfalls aus Kunststoff bestehen kann. Anders als die Haltehülse 18 aus Figur 1 weist die Haltehülse 18' an ihrer Innenumfangsfläche vorgesehene elastische Rastelemente 42' und an ihrer Außenumfangsfläche vorgesehene elastische Rastelemente 44' auf. Mit diesen elastischen Rastelementen 42' und 44' verrastet die Haltehülse 18' einerseits an den Schaftabschnitt des Befestigungsbolzens 10 und andererseits an der ersten Begrenzungshülse 20, so dass in diesem Fall der Befestigungsbolzen 10 über die Haltehülse 18' durch Verrastung bzw. Formschluss in der ersten Begrenzungshülse 20 gehalten ist.

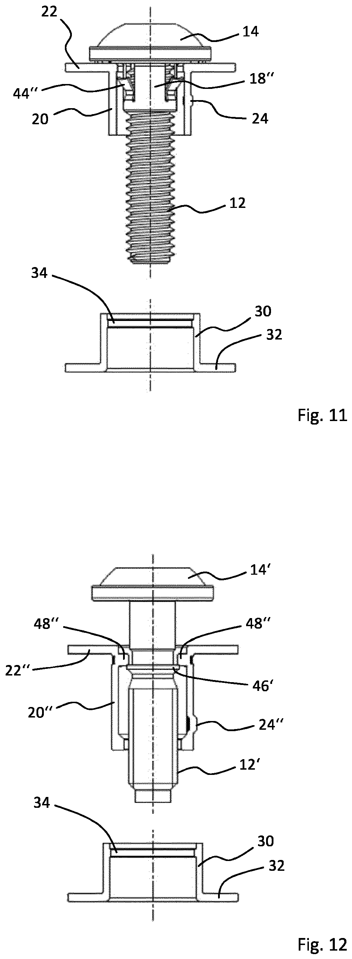

In Figur 11 ist ein weiteres Ausführungsbeispiel eines nichterfindungsgemäßen Systems dargestellt. Dieses entspricht weitestgehend dem in Figur 1 gezeigten Ausführungsbeispiel und unterscheidet sich nur hinsichtlich der Ausgestaltung der Haltehülse.

Bei dem in Figur 11 gezeigten Ausführungsbeispiel ist eine Haltehülse 18" vorgesehen, die ebenfalls über elastische Rastmittel 44" an ihrer Außenumfangsfläche und über elastische Rastmittel an ihrer Innenumfangsfläche verfügt, die in Figur 11 verdeckt sind. Mit diesen elastischen Rastmitteln verrastet die Haltehülse 18" aus Figur 11 wiederum einerseits an dem Schaftabschnitt des Befestigungsbolzens 10 und andererseits an der Innenfläche der ersten Begrenzungshülse 20. Während die in Figur 8 dargestellte Haltehülse 18' beispielsweise aus Kunststoff bestehen kann, kann die in Figur 11 gezeigte Haltehülse 18" beispielsweise aus Metall bestehen.

In Figur 12 ist ein Ausführungsbeispiel eines erfindungsgemäßen Systems dargestellt, das sich von dem in Figur 1 gezeigten Ausführungsbeispiel hinsichtlich der Ausgestaltung des Befestigungsbolzens und der ersten Begrenzungshülse unterscheidet. Der bei dem System aus Figur 12 verwendete Befestigungsbolzen 10' ist in den Figuren 13 und 14 genauer zu erkennen. Er weist wiederum einen Schaftabschnitt mit einem in den Figuren 12 bis 14 nicht näher dargestellten Außengewinde 12' und einem gegenüber dem Schaftabschnitt im Querschnitt vergrößerten Bolzenkopf 14' mit einem Eingriffsabschnitt 16' für ein Drehwerkzeug auf. Außerdem ist zwischen dem Außengewinde 12' und dem Bolzenkopf 14' ein ringförmig umlaufender Rastvorsprung 46' ausgebildet. Mit diesem wird der Befestigungsbolzen 10' in einer in den Figuren 15 und 16 dargestellten ersten Begrenzungshülse 20" nach einem weiteren Ausführungsbeispiel gehalten. Diese erste Begrenzungshülse 20" weist wiederum einen kreisringförmigen ersten Anlageflansch 22" auf. Außerdem weist sie an ihrer Außenumfangsfläche mehrere Rastvorsprünge 24" auf. Im Bereich ihres dem ersten Anlageflansch 22" zugewandten Endes weist die erste Begrenzungshülse 20" darüber hinaus an ihrer Innenumfangsfläche mehrere Rastvorsprünge 48" auf. Diese verrasten an dem Rastvorsprung 46' des Befestigungsbolzens 10', wie insbesondere in Figur 12 zu erkennen. Auf diese Weise wird der Befestigungsbolzen 10' auch ohne zusätzliche Haltehülse in einer Vormontageposition an der ersten Begrenzungshülse 20" gehalten. Der konstruktive Aufwand des Systems wird hierdurch weiter verringert.

Zur Montage wird der Befestigungsbolzen 10' mit der ersten Begrenzungshülse 20" in dem in Figur 12 gezeigten vormontierten Zustand in die Durchgangsöffnung 28 der ersten Komponente 26 eingesetzt und von der gegenüberliegenden Seite die zweite Begrenzungshülse 30 in die Durchgangsöffnung 28 eingesetzt, wie dies oben grundsätzlich zu dem System anhand von Figur 17 erläutert wurde.

Dabei verrasten die Rastvorsprünge 24" der ersten Begrenzungshülse 20" mit dem ringförmigen Rastvorsprung 24 der zweiten Begrenzungshülse 30 und der erste Anlageflansch 22" der ersten Begrenzungshülse 20" und der zweite Anlageflansch 32 der zweiten Begrenzungshülse 30 kommen wiederum von gegenüberliegenden Seiten zur Anlage an der ersten Komponente 26.

Die Ausführungsbeispiele können dabei in grundsätzlich beliebiger Weise miteinander kombiniert werden. Sämtlichen Ausführungsbeispielen ist gemein, dass sie bei einfacher Montage einen umfassenden radialen Toleranzausgleich und gegebenenfalls auch einen axialen Toleranzausgleich bereitstellen.

### Bezugszeichenliste

- 10: Befestigungsbolzen
- 10': Befestigungsbolzen
- 12: Außengewinde
- 12': Außengewinde
- 14: Bolzenkopf
- 14': Bolzenkopf
- 16: Eingriffsabschnitt
- 16': Eingriffsabschnitt
- 18: Haltehülse
- 18': Haltehülse
- 18": Haltehülse
- 20: erste Begrenzungshülse
- 20': erste Begrenzungshülse
- 20": erste Begrenzungshülse
- 22: erster Anlageflansch
- 22': erster Anlageflansch
- 22": erster Anlageflansch
- 24: Rastvorsprung
- 24': Rastvorsprung
- 24": Rastvorsprung
- 26: erste Komponente
- 26': erste Komponente
- 28: Durchgangsöffnung
- 28': Durchgangsöffnung
- 30: zweite Begrenzungshülse
- 30': zweite Begrenzungshülse
- 32: zweiter Anlageflansch
- 32': zweiter Anlageflansch
- 36: elastische Vorsprünge
- 38': axiale Schlitze
- 40': elastische Vorsprünge
- 42': elastische Rastelemente
- 44': elastische Rastelemente
- 44": elastische Rastmittel
- 46': Rastvorsprung
- 48": Rastvorsprung

## Patentansprüche

1. System zur Befestigung einer ersten Komponente (26) mit einer Durchgangsöffnung (28) an einer zweiten Komponente, insbesondere einer zweiten Komponente eines Fahrzeugs, umfassend die erste Komponente (26) sowie einen Befestigungsbolzen (10'), wobei
- eine erste Begrenzungshülse ( 20") mit einem ersten Anlageflansch (22") und eine zweite Begrenzungshülse (30) mit einem zweiten Anlageflansch (32) vorgesehen ist, wobei die erste Begrenzungshülse ( 20") und die zweite Begrenzungshülse (30) von gegenüberliegenden Seiten in die Durchgangsöffnung (28) der ersten Komponente (26) einsetzbar und durch Einsetzen der ersten Begrenzungshülse ( 20") in die zweite Begrenzungshülse (30) miteinander verbindbar sind, so dass der erste Anlageflansch ( 22") und der zweite Anlageflansch (32) von gegenüberliegenden Seiten an der ersten Komponente (26) anliegen, wobei der Befestigungsbolzen (10') durch die Begrenzungshülsen ( 20", 30) hindurch in eine Befestigungsaufnahme der zweiten Komponente einsetzbar ist, und wobei
- der Außendurchmesser der zweiten Begrenzungshülse (30) geringer ist als der Innendurchmesser der Durchgangsöffnung (28) der ersten Komponente (26), **dadurch gekennzeichnet, dass**
- Haltemittel vorgesehen sind zum Halten des Befestigungsbolzens ( 10') in der ersten Begrenzungshülse ( 20") in einer Vormontageposition ohne zusätzliche Haltehülse, wobei die Haltemittel Rastmittel an der Innenumfanasfläche der ersten Begrenzungshülse (20") und wobei die Haltemittel Rastmittel an der Außenumfangsfläche des Befestigungsbolzens ( 10') umfassen.

2. System nach Anspruch 1,
**dadurch gekennzeichnet, dass** weitere Rastmittel vorgesehen sind zum Verrasten der ersten Begrenzungshülse ( 20") an der zweiten Begrenzungshülse (30).

3. System nach Anspruch 2,
**dadurch gekennzeichnet, dass** die weiteren Rastmittel mindestens einen Rastvorsprung ( 24") und/oder mindestens eine Rastaufnahme an der Außenumfangsfläche der ersten Begrenzungshülse ( 20") und mindestens einen Rastvorsprung (34) und/oder mindestens eine Rastaufnahme an der Innenumfangsfläche der zweiten Begrenzungshülse (30) umfassen.

4. System nach Anspruch 1,
**dadurch gekennzeichnet, dass**
die Rastmittel mindestens einen Rastvorsprung (48") und/oder mindestens eine Rastaufnahme an der Innenumfangsfläche der ersten Begrenzungshülse (20") umfassen.

5. System nach Anspruch 1,
**dadurch gekennzeichnet, dass**
die Rastmittel mindestens einen Rastvorsprung (46') und/oder mindestens eine Rastaufnahme an der Außenumfangsfläche des Befestigungsbolzens (10') umfassen.

6. System nach einem der vorhergehenden Ansprüche,
**dadurch gekennzeichnet, dass**
die erste Begrenzungshülse ( 20") aus Kunststoff oder Metall besteht und/oder dass die zweite Begrenzungshülse (30) aus Kunststoff oder Metall besteht.

7. System nach einem der vorhergehenden Ansprüche,
**dadurch gekennzeichnet, dass**
axiale Ausgleichsmittel vorgesehen sind, die bei miteinander verbundener erster und zweiter Begrenzungshülse (20", 30) einen Toleranzausgleich für den axialen Abstand zwischen dem ersten Anlageflansch ( 22") und dem zweiten Anlageflansch (32) bereitstellen.

8. System nach Anspruch 7,
**dadurch gekennzeichnet, dass**
die axialen Ausgleichsmittel elastische Vorsprünge (40') an der der ersten Komponente (26) zugewandten Innenseite des ersten Anlageflansches ( 22") der ersten Begrenzungshülse ( 20") und/oder an der der ersten Komponente (26) zugewandten Innenseite des zweiten Anlageflansches (32) der zweiten Begrenzungshülse (30) umfassen und/oder dass die axialen Ausgleichsmittel elastische Vorsprünge (36) an der dem ersten Anlageflansch (22") der ersten Begrenzungshülse ( 20") und/oder dem zweiten Anlageflansch (32) der zweiten Begrenzungshülse (30) zugewandten Seite der ersten Komponente (26) umfassen.

## Claims

1. A system for fastening a first component (26) having a through-opening (28) to a second component, in particular a second component of a vehicle, comprising the first component (26) and a fastening bolt (10'), wherein
- a first limiting sleeve (20") having a first abutment flange (22") and a second limiting sleeve (30) having a second abutment flange (32) are provided, wherein the first limiting sleeve (20") and the second limiting sleeve (30) can be inserted from opposite sides into the through-opening (28) of the first component (26) and can be connected to one another by inserting the first limiting sleeve (20") into the second limiting sleeve (30) such that the first abutment flange (22") and the second abutment flange (32) abut against the first component (26) from opposite sides, wherein the fastening bolt (10') can be inserted through the limiting sleeves (20", 30) and into a fastening receptacle of the second component, and wherein
- the outer diameter of the second limiting sleeve (30) is less than the inner diameter of the through-opening (28) of the first component (26), **characterized in that**
- retaining means are provided for retaining the fastening bolt (10') in the first limiting sleeve (20") in a pre-assembly position without an additional retaining sleeve,
wherein the retaining means comprises locking means on the inner circumferential surface of the first limiting sleeve (20") and wherein the retaining means comprises locking means on the outer circumferential surface of the fastening bolt (10').

2. The system according to claim 1,
**characterized in that** further locking means are provided for locking the first limiting sleeve (20") to the second limiting sleeve (30).

3. The system according to claim 2,
**characterized in that**
the further locking means comprise at least one locking protrusion (24") and/or at least one locking receptacle on the outer circumferential surface of the first limiting sleeve (20") and at least one locking protrusion (34) and/or at least one locking receptacle on the inner circumferential surface of the second limiting sleeve (30).

4. The system according to claim 1,
**characterized in that**
the locking means comprise at least one locking protrusion (48") and/or at least one locking receptacle on the inner circumferential surface of the first limiting sleeve (20").

5. The system according to claim 1,
**characterized in that**
the locking means comprise at least one locking protrusion (46') and/or at least one locking receptacle on the outer circumferential surface of the fastening bolt (10').

6. The system according to any one of the preceding claims, **characterized in that**
the first limiting sleeve (20") consists of plastic or metal and/or the second limiting sleeve (30) consists of plastic or metal.

7. The system according to any one of the preceding claims, **characterized in that**
axial compensating means are provided, which, when the first and second limiting sleeves (20", 30) are connected, create a tolerance compensation for the axial distance between the first abutment flange (22") and the second abutment flange (32).

8. The system according to claim 7,
**characterized in that**
the axial compensating means comprise elastic protrusions (40') on the inner side of the first abutment flange (22") of the first limiting sleeve (20") facing the first component (26) and/or on the inner side of the second abutment flange (32) of the second limiting sleeve (30) facing the first component (26) and/or the axial complimenting means comprise elastic protrusions (36) on the side of the first component (26) facing the first abutment flange (22") of the first limiting sleeve (20") and/or the second abutment flange (32) of the second limiting sleeve (30).

## Revendications

1. Système de fixation d'un premier élément (26) ayant une ouverture traversante (28) à un deuxième élément, en particulier un deuxième élément d'un véhicule, comprenant le premier élément (26) et un boulon de fixation (10'), dans lequel
- un premier manchon de limitation (20") ayant une première bride de butée (22") et un deuxième manchon de limitation (30) ayant une deuxième bride de butée (32) sont fournis, dans lequel le premier manchon de limitation (20") et le deuxième manchon de limitation (30) peuvent être insérés à partir de côtés opposés dans l'ouverture traversante (28) du premier élément (26) et peuvent être connectés l'un à l'autre par l'insertion du premier manchon de limitation (20") dans le deuxième manchon de limitation (30) de sorte que la première bride de butée (22") et la deuxième bride de butée (32) viennent en butée contre le premier élément (26) à partir de côtés opposés, dans lequel le boulon de fixation (10') peut être inséré à travers les manchons de limitation (20", 30) et dans un réceptacle de fixation du deuxième élément, et dans lequel
- le diamètre externe du deuxième manchon de limitation (30) est inférieur au diamètre interne de l'ouverture traversante (28) du premier élément (26), **caractérisé en ce que**
- des moyens de retenue sont fournis pour la retenue du boulon de fixation (10') dans le premier manchon de limitation (20") dans une position préassamblée sans un manchon de retenue supplémentaire,
dans lequel les moyens de retenue comprennent un moyen de verrouillage sur la surface circonférentielle interne du premier manchon de limitation (20") et dans lequel le moyen de retenue comprend un moyen de verrouillage sur la surface circonférentielle externe du boulon de fixation (10').

2. Système selon la revendication 1,
**caractérisé en ce que** des moyens de verrouillage supplémentaires sont fournis pour le verrouillage du premier manchon de limitation (20") au deuxième manchon de limitation (30).

3. Système selon la revendication 2,
**caractérisé en ce que**
les moyens de verrouillage supplémentaires comprennent au moins une protubérance de verrouillage (24") et/ou au moins un réceptacle de verrouillage sur la surface circonférentielle externe du premier manchon de limitation (20") et au moins une protubérance de verrouillage (34) et/ou au moins un réceptacle de verrouillage sur la surface circonférentielle interne du deuxième manchon de limitation (30).

4. Système selon la revendication 1,
**caractérisé en ce que**
les moyens de verrouillage comprennent au moins une protubérance de verrouillage (48") et/ou au moins un réceptacle de verrouillage sur la surface circonférentielle interne du premier manchon de limitation (20").

5. Système selon la revendication 1,
**caractérisé en ce que**
les moyens de verrouillage comprennent au moins une protubérance de verrouillage (46') et/ou au moins un réceptacle de verrouillage sur la surface circonférentielle externe du boulon de fixation (10').

6. Système selon l'une quelconque des revendications précédentes,
**caractérisé en ce que**
le premier manchon de limitation (20") est constitué de plastique ou de métal et/ou le deuxième manchon de limitation (30) est constitué de plastique ou de métal.

7. Système selon l'une quelconque des revendications précédentes,
**caractérisé en ce que**
des moyens de compensation axiale sont fournis, lesquels, lorsque les premier et deuxième manchons de limitation (20", 30) sont reliés, créent une compensation de tolérance pour la distance axiale entre la première bride de butée (22") et la deuxième bride de butée (32).

8. Système selon la revendication 7,
**caractérisé en ce que**
les moyens de compensation axiale comprennent des protubérances élastiques (40') sur le côté interne de la première bride de butée (22") du premier manchon de limitation (20") faisant face au premier élément (26) et/ou sur le côté interne de la deuxième bride de butée (32) du deuxième manchon de limitation (30) faisant face au premier élément (26) et/ou les moyens de butée axiale comprennent des protubérances élastiques (36) sur le côté du premier élément (26) faisant face à la première bride de butée (22") du premier manchon de limitation (20") et/ou à la deuxième bride de butée (32) du deuxième manchon de limitation (30).
